# EUROPEAN PATENT APPLICATION

(11) **EP 2 894 450 A1**
(43) Date of publication of application: **15.07.2015**
(21) Application number: 14150913.3
(22) Date of filing: 13.01.2014
(51) Int. Cl.: G01L 19/00

(54) **A sensor for measuring fluid variables in a corrosive environment**

(71) Applicant: Danfoss A/S, 6430 Nordborg (DK)
(72) Inventor: Chiriaev, Serguei, 6430 Nordborg (DK)

(57) **Abstract**

A sensor comprising a tubular member (9), a diaphragm (10) mounted on a first end of the tubular member (9) and a sensing element (11) mounted on the diaphragm (10). One or more electrical wires (12) provide electrical connection between the sensing element (11) and a sensor electronics unit (25) arranged at a second end of the tubular member (9). The wires (12) are arranged inside one or more through-going channels (16) provided in a wall part of the tubular member (9), the channels (16) extending in an axial direction defined by the tubular member (9).

## Description

### FIELD OF THE I NVENTI ON

The present invention relates to a sensor for measuring fluid variables, such as pressure and/or temperature, in a corrosive and/or chemically aggressive environment.

### BACKGROUND OF THE I NVENTI ON

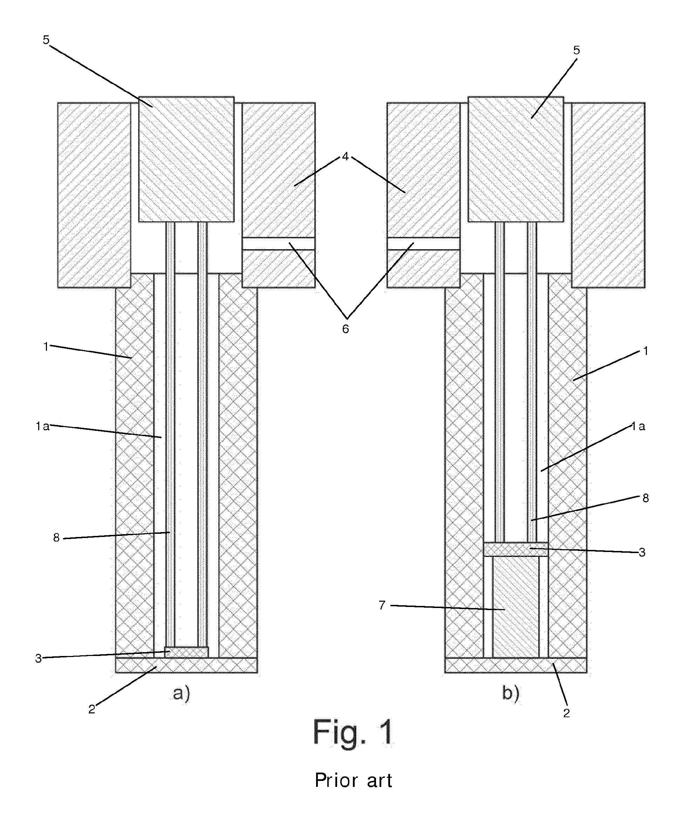

Pressure and temperature are thermodynamic fluid-state variables, measurement and control of which is fundamental to modern industrial technologies. Among various types of pressure sensors, temperature sensors and combined pressure and temperature sensors, there is a broad range of devices which include an elongated tubular member. Generic designs of such sensors are illustrated in Figs. 1 a and 1 b.

In the sensors of Figs. 1a and 1b, one end of a tubular member 1 is positioned in a fluid region, where the relevant variable(s) is/are measured, and comprises a sensing member that includes a diaphragm 2, one side of which is in direct contact with the fluid, and a sensing element 3 which is attached to the opposite side of the diaphragm 2, and converts the fluid variables into electrical signals. The diaphragm 2 transfers the variables from the fluid to the sensing element 3, and together with the walls of tubular member 1, hermetically separates the interior part of the sensor from the fluid. In the case that the sensor performs pressure measurements, the transfer of fluid variable to the sensing element 3 is accomplished by deflections of the diaphragm 2 induced by a difference in pressure of the measured fluid and of a reference fluid accommodated in the cavity formed by diaphragm 2 and a through-hole 1a formed in the tubular member 1. In the case that the sensor performs temperature measurements, the transfer of the fluid variable occurs by means of heat conduction through the diaphragm 2 and the walls of the tubular member 1.

The end of tubular member 1, which is arranged opposite to the diaphragm 2, is connected to a compartment 4 that may contain terminals to an external electronic device required for conditioning of an output signal of the sensor, or to an internal signal conditioning electronic circuit board 5. In a range of sensor designs, compartment 4 is sealed with respect to the surrounding atmosphere in order to provide measurements of sealed gauge pressure. In the designs for measurements of gauge pressure, a connection to the surrounding atmosphere, in the form of a hole 6, preferably with a particle filter, formed in the compartment 4 is provided.

In the sensor of Fig. 1a, the sensing element 3 is attached directly to the diaphragm 2. In the sensor of Fig. 1b, the sensing element 3 is arranged at a distance from the diaphragm 2. This is done in order to minimize deteriorating influence of thermo-mechanical stress of fluid media during sensor operation, and in order to increase the working lifetime of the sensing element 3. In this case, a rigid or liquid transmission member 7 is provided for transmitting strain induced by pressure from the diaphragm 2 to the sensing element 3.

Electrical connections, including wires 8, are arranged between the sensing element 3 and the signal conditioning electronic circuit board 5. The wires 8 are located inside the cavity formed by the interior surfaces of through-hole 1a of tubular member 1 and of diaphragm 2. These connections further include contact elements, such wire bonds or solder joints. This results in a number of limitations and disadvantages, such as:
1) Sensor operation is limited to the fluids of reference pressure, which are not corrosive and chemically aggressive to electrical connection components, and do not mediate electrical leak currents between these components.
2) Reduced lifetime of the contact elements due to mechanical fatigue induced by the diaphragm deflections.
3) Parasitic strain that is induced in the sensing elements by electrical connection components and that can drift with time resulting in drift of the sensor signal.

US 4,916,426 discloses a pressure sensor having a ceramic pressure sensing element including a bottom wall serving as a diaphragm, and a tubular wall which extends from a periphery of the bottom wall and cooperates with the bottom wall to define a cavity. The diaphragm has resistors formed thereon. The resistors are electrically connected to an external electric device by electrically conductive members. The electrically conductive members may be in the form of electrically conductive paths formed through the tubular wall.

### DESCRIPTI ON OF THE I NVENTI ON

It is an object of embodiments of the invention to provide a sensor which can be used for measuring fluid variables in a corrosive fluid.

It is a further object of embodiments of the invention to provide a sensor for use in corrosive environments, which is easy and cost effective to manufacture.

It is an even further object of embodiments of the invention to provide a sensor having an increased lifetime as compared to prior art sensors.

It is an even further object of embodiments of the invention to provide a sensor having improved stability as compared to prior art sensors.

The invention provides a sensor comprising:
- a tubular member comprising a wall part, said wall part defining an inner surface and an outer surface, and said tubular member extending in an axial direction,
- a diaphragm mounted on a first end of the tubular member in such a manner that a cavity is defined by the tubular member and the diaphragm, the cavity being delimited by the inner surface of the wall part of the tubular member and a surface of the diaphragm, said cavity extending in the axial direction,
- a sensing element mounted on the diaphragm,
- a sensor electronics unit arranged at a second end of the tubular member, said second end being arranged opposite to the first end, in the axial direction,
- one or more electrical wires providing electrical connection between the sensing element and the sensor electronics unit,
wherein the wall part of the tubular member is provided with one or more through-going channels extending in the axial direction, and wherein each of the electrical wires is arranged inside one of the through-going channels.

In the present context the term 'sensor' should be interpreted to mean a device which is capable of measuring one or more variables, e.g. fluid variables, such as temperature, pressure, etc.

The sensor of the invention comprises a tubular member comprising a wall part. In the present context the term 'tubular member' should be interpreted to mean a member or element which has the shape of a tube, i.e. comprising a wall part extending in an axial direction, and which surrounds a cavity formed inside the tubular member. The tubular member may have a cylindrical shape. In this case the axial direction is the symmetry axis of the cylinder. The wall part defines an inner surface and an outer surface. The inner surface faces the interior of the tubular member, i.e. it faces the cavity formed inside the tubular member. The outer surface faces the exterior of the tubular member, i.e. it faces the surroundings.

The sensor further comprises a diaphragm mounted on a first end of the tubular member. The diaphragm is mounted on the tubular member in such a manner that a cavity is defined by the tubular member and the diaphragm. Thus, the diaphragm delimits the cavity described above at the end of the tubular member where the diaphragm is mounted. Thus, the cavity extends in the axial direction from the end of the tubular member where the diaphragm is mounted towards an opposite end of the tubular member.

A sensing element is mounted on the diaphragm. In the present context the term 'sensing element' should be interpreted to mean an element which is capable of detecting a variable value, and/or variations of a variable value, and of outputting a signal being representative for the detected variable value or variations of a variable value. The variable value may, e.g., be a value of a fluid variable, such as gauge pressure, differential pressure, temperature, etc. The sensing element may comprise one or more electrical components being capable of detecting physical values being indicative for the variable being measured. For instance, in the case that the variable being measured is a pressure, the sensing element may comprise electrical components, such as piezoresistors, e.g. forming a Wheatstone bridge, being capable of detecting deflections of the diaphragm due to the pressure acting on the diaphragm. Similarly, in the case that the variable being measured is a temperature, the sensing element may comprise electrical components, e.g. in the form of a thermistor, being capable of sensing a temperature or temperature variation due to heat being conducted through the diaphragm.

The sensor further comprises a sensor electronics unit. In the present context the term 'sensor electronics unit' should be interpreted to mean a unit comprising electronics being capable of processing signals received from the sensing element in order to derive a value representing the variable value being measured by the sensing element.

The sensor electronics unit is arranged at a second end of the tubular member, and the second end is arranged opposite to the first end, in the axial direction. Thus, the sensing element, which is mounted on the diaphragm, and the sensor electronics unit are arranged at opposite ends of the tubular member. Accordingly, the signals being output by the sensing element must be conveyed along the entire length of the tubular member, or at least along a substantial part of the length of the tubular member, in order to be processed by the sensor electronics unit.

To this end one or more electrical wires are provided for providing electrical connection between the sensing element and the sensor electronics unit. In the present context the term 'electrical wire' should be interpreted to mean an element made from an electrically conductive material, encapsulated by an electrically insulating material, where the electrically conductive material is arranged in contact with one or more components of the sensing element and with the one or more components of the sensor electronics unit, thereby establishing an electrical connection there between.

The wall part of the tubular member is provided with one or more through-going channels extending in the axial direction. Thus, the through-going channels extend in a part of the wall part which is arranged between the inner surface and the outer surface, and they extend in parallel to the cavity defined inside the tubular member. Accordingly, the through-going channels extend, inside the wall part, from the first end of the tubular member having the diaphragm, carrying the sensing element, mounted thereon, to the second end of the tubular member, where the sensor electronics unit is arranged.

Each of the electrical wires is arranged inside one of the through-going channels. Thereby the wires are arranged inside the wall part, and the wall part thereby protects the wires from any fluid arranged in the cavity as well as from any fluid which the sensor may be arranged in contact with for the purpose of measuring fluid variables of the fluid. Thereby the risk of the wires being damaged by corrosive and/or chemically aggressive fluids is considerably reduced. This allows the sensor to be used in a corrosive or chemically aggressive environment, without risking damage to the wires. Damage to the wires could lead to reduced sensor lifetime, and/or to the sensor being unreliable or unstable, and therefore the sensor of the invention has an increased lifetime and performs in a more reliable manner as compared to prior art sensors.

Furthermore, since the through-going channels extend through the wall part as described above, the wires arranged inside the through-going channels can provide the required electrical connection between the sensing element and the sensor electronics unit.

Finally, since the required electrical connection between the sensing element and the sensor electronics unit is provided by means of ordinary wires, arranged inside the through-going channels, the sensor is easy and cost effective to manufacture, since it is only necessary to provide the through-going channels in the wall part, and then arrange ordinary wires inside these channels. This is significantly easier and more reliable than forming electrically conductive paths directly in the wall part, similar to the solution described in US 4,916,426. In addition, since the wires are accommodated in channels formed in the wall part of the tubular member, the wires are connected to the sensing element at a position near a rim of the diaphragm, rather than at a central portion of the diaphragm. When the diaphragm deflects during operation of the sensor, the deflections are significantly larger at the central portion of the diaphragm than at the rim of the diaphragm, where the diaphragm is attached to the tubular member. Therefore, attaching the wires to the sensing element near the rim of the diaphragm reduces the risk of damage to the connections between the wires and the sensing element, as compared to the situation where the wires are attached to a central portion of the diaphragm.

The sensing element may comprise a layered structure comprising a sensing layer and a protecting and/or bonding layer. According to this embodiment, the sensing element comprises at least two layers, i.e. the sensing layer and a protecting layer, a bonding layer or a combined protecting and bonding layer. The sensing element may comprise a protecting layer as well as a bonding layer.

The sensing layer is the part of the sensing element which holds the one or more electrical components which perform the actual sensing.

The protecting layer is arranged to protect the sensing layer, or at least the electrical components of the sensing layer. Thus, the protecting layer may advantageously be arranged relative to the sensing layer in such a manner that it shields the sensing layer, e.g. with respect to fluids which the sensor is arranged in contact with, including a fluid of which the sensor is arranged to measure fluid variables, as well as a reference fluid arranged in the cavity defined inside the tubular member.

The bonding layer bonds the diaphragm and the sensing element to the tubular member, preferably in a fluid tight manner, thereby preventing measured fluid from entering the cavity defined inside the tubular member.

As described above, the sensing element may comprise separate protecting and bonding layers. I n this case the protecting layer has the sole purpose of protecting the sensing layer, and the bonding layer has the sole purpose of bonding the diaphragm and the sensing element to the tubular member. In this case the layered structure may be arranged on a surface of the diaphragm with the sensing layer being arranged closest to the surface of the diaphragm, and with the protecting layer arranged between the sensing layer and the bonding layer.

As an alternative, the sensing element may comprise a combined protecting and bonding layer. According to this embodiment, a single layer serves to protect the sensing layer and bond the diaphragm and the sensing element to the tubular member.

The sensing layer, the protecting layer and/or the bonding layer may be thin film layers. Furthermore, one or more of the layers may be a thick film layer. For instance, the sensing layer and the protecting layer may be thin film layers, while the bonding layer is a thick film layer. The bonding layer may, e.g., be a glass frit layer. The protecting layer may, e.g., be a silicon dioxide or a silicon nitride thin film layer.

The protecting and/or bonding layer may be provided with one or more through-going holes, and each of the through-going holes of the protecting and/or bonding layer may be aligned with one of the through-going channels formed in the wall part, each through-going hole thereby providing a passage from a through-going channel to the sensing layer for accommodating a part of an electrical wire.

According to this embodiment, the through-going channels formed in the wall part of the tubular member are extended through the protecting and/or bonding layer, via the through-going holes, to reach the sensing layer. Thereby the wires can be accommodated inside the extended channels, interconnecting the sensing layer and the sensor electronics unit, without risking coming into contact with potentially corrosive fluids.

The protecting and/or bonding layer may hermetically seal the through-going channels and/or the sensing layer from a fluid arranged in contact with an exterior surface of the diaphragm. According to this embodiment, wires inside the through-going channels and/or the sensing layer are efficiently protected against any corrosive fluids which the sensor is arranged into contact with. Furthermore, the protecting and/or bonding layer may hermetically seal the cavity defined inside the tubular member from the exterior of the sensor.

A reference fluid may be arranged in the cavity. According to this embodiment, the sensor may advantageously be adapted to measure differential pressure. The diaphragm deflects according to a difference in pressure between the pressure prevailing in the reference fluid and the pressure prevailing in a fluid which is in contact with an exterior surface of the diaphragm. In this case it is particularly advantageous that the wires are arranged inside the channels formed in the wall part of the tubular member, instead of inside the cavity defined inside the tubular member, since in the latter case the wires would be arranged in contact with the, potentially corrosive, reference fluid.

The sensor may further comprise a reference fluid passage for allowing reference fluid to pass into or out of the cavity. According to this embodiment, reference fluid may be introduced into or removed from the cavity, via the reference fluid passage.

The sensor may be a pressure sensor, i.e. the sensor may be adapted to measure a pressure, such as a gauge pressure or a differential pressure. In this case the sensing element comprises one or more electrical components being capable of generating an electrical signal in response to deflections of the diaphragm, caused by pressure acting on the diaphragm. The electrical components may, e.g. be or comprise piezoresistors arranged in a Wheatstone bridge.

Alternatively or additionally, the sensor may be a temperature sensor, i.e. the sensor may be adapted to measure a temperature. In this case the sensing element may comprises one or more electrical components being capable of generating an electrical signal which reflects the temperature at the position of the diaphragm, and thereby the position of the sensing element.

The sensor may be a pure temperature sensor, i.e. it may be adapted to measure temperature only. Alternatively, the sensor may be a combined pressure and temperature sensor. In this case the sensor is adapted to measure pressure as well as temperature, and the sensing element comprises one or more electrical components being able to generate an electrical signal in response to a pressure, e.g. based on measured deflections of the diaphragm, as well as one or more electrical components being able to generate an electrical signal in response to a temperature.

The tubular member and/or the diaphragm may be made from a ceramic electrically insulating material. According to this embodiment, the tubular member may be made from a ceramic electrically insulating material, or the diaphragm may be made from a ceramic electrically insulating material, or the tubular member as well as the diaphragm may be made from a ceramic electrically insulating material. According to one embodiment, the diaphragm may be made from a ceramic electrically insulating material, while the tubular member may be made from a metal. In the case that the tubular member as well as the diaphragm is made from a ceramic electrically insulating material, the tubular member and the diaphragm may be made from the same material, or they may be made from different kinds of ceramic electrically insulating materials. The ceramic electrically insulating material may, e.g., be an alum ina ceram ic.

Each of the electrical wires may be attached to the sensing element by means of a contact element.

According to a preferred embodiment of the invention the sensor includes the following features:
1) The tubular member and the diaphragm are made of alumina ceramic and bonded to each other with a glass frit material.
2) The sensing components in and electrical connections to the sensing layer are thin film components or thick film components or a combination of thin film and thick film components.
3) The tubular member is bonded to the sensor electronics unit with a glass frit material, and so that the glass frit is bonded in mechanical compression in the entire range of the sensor operating temperature and pressure.
4) The tubular member is protected from a direct mechanical contact and electromagnetic fields by a metallic shield bonded to the sensor electronics unit. The shield has one or a plurality of through-holes which ensure path of the measured fluid to the diaphragm.

### BRI EF DESCRI PTI ON OF THE DRAWINGS

The invention will now be described in further detail with reference to the accompanying drawings in which
Figs. 1a and 1b are cross sectional views of two prior art sensors,
Fig. 2 is a cross sectional view of a sensor according to a first embodiment of the invention,
Figs. 3a and 3b show details of the sensor of Fig. 2,
Figs. 4a and 4b illustrate a sensor according to a second embodiment of the invention,
Fig. 5 is a cross sectional view of a sensor according to a third embodiment of the invention,
Fig. 6 is a cross sectional view of a sensor according to a fourth embodiment of the invention,
Fig. 7 is a cross sectional view of a sensor according to a fifth embodiment of the invention,
Fig. 8 is a cross sectional view of a sensor according to a sixth embodiment of the invention,
Fig. 9 is a cross sectional view of a sensor according to a seventh embodiment of the invention, and
Fig. 10 is a cross sectional view of a sensor according to an eighth embodiment of the invention.

### DETAI LED DESCRI PTI ON OF THE DRAWINGS

The prior art sensors illustrated in Figs. 1a and 1b have already been described above.

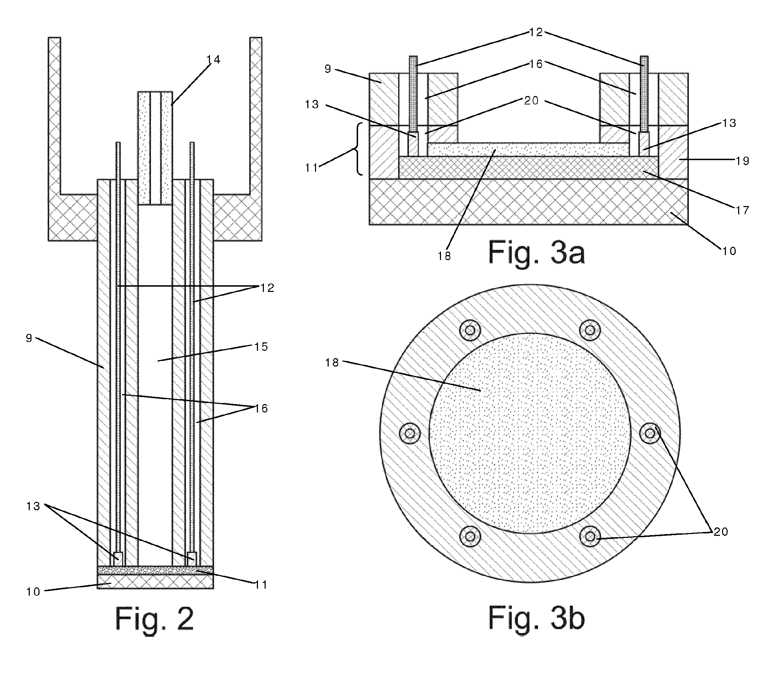

Fig. 2 is a cross sectional view of a sensor according to a first embodiment of the invention. The sensor comprises a tubular member 9, a diaphragm 10 that deflects due to difference in pressure applied to the opposite sides of the diaphragm 10, a layered sensing element 11, wires 12, contact elements 13, and a reference fluid connector 14 for allowing reference fluid to pass into and out of a cavity 15 defined inside the tubular member 9.

The tubular member 9 has a central through-hole, defining a cavity 15 which extends along an axial direction of the tubular member 9. Furthermore, a plurality of through-going channels 16 are formed in a wall part of the tubular member 9, each of the through-going channels 16 extending in the axial direction.

Figs. 3a and 3b show details of the sensor of Fig. 2. More particularly, Figs. 3a and 3b show details of the sensing element 11. The sensing element 11 is in the form of a layered structure arranged on one side of the diaphragm 10. The sensing element 11 comprises a sensing layer 17, a protecting layer 18 and a bonding layer 19. The layers 17, 18, 19 are mounted on a surface of the diaphragm 10 in such a manner that the sensing layer 17 is arranged closest to the surface of the diaphragm 10, and the protecting layer 18 is arranged between the sensing layer 17 and the bonding layer 19.

The bonding layer 19 and the protecting layer 18 are provided with overlapping through-going holes 20 at their edges or rims. The through-going holes 20 are further aligned with the through-going channels 16 formed in the wall part of the tubular member 9. Thereby the through-going channels 16 and the through-going holes 20 in combination form passages from the sensing layer 17 to an end of the tubular member 9 which is arranged opposite to the end where the diaphragm 10 is mounted. The bonding layer 19 is arranged so that it seals these passages with respect to both the measured fluid and the reference fluid. The bonding layer 19 is also arranged so that it hermetically seals the sensing layer 17 and the protecting layer 18 with respect to the measured fluid. The wires 12 are arranged in these passages. Thus, the wires 12 are efficiently protected by the wall of the tubular member 9, the protecting layer 18 and the bonding layer 19. The bonding layer 19 further bonds the diaphragm 10 to one end of the tubular member 9.

The wires 12 and contact elements 13 provide electrical connections between sensing layer 17 and a sensor electronics unit (not shown) arranged at an opposite end of the tubular member 9. As described above, the wires 12 as well as the contact elements 13 are arranged inside the passages formed by the trough-going channels 16 located in the walls of the tubular member 9 and the trough-going holes 20 formed in the bonding layer 19 and the protecting layer 18.

An important feature of this design is that the tubular member 9, the bonding layer 19 and the protecting layer 18 may be made of materials that are chemically resistant to the measured fluid and to the reference fluid, e.g. these materials do not corrode and do not degrade in their sealing properties in direct contact with these fluids.

Such a design eliminates the abovementioned limitations and drawbacks of the sensors of the prior art because:
1) Wiring members 12 and contact elements 13 are inaccessible for the measured fluid as well as for the reference fluid. Thus, they cannot be attacked by chemically aggressive ingredients of these fluids.
2) Mechanical fatigue lifetime of the contact elements 13 is increased. This is because the contact elements 13 are positioned in the peripheral area of diaphragm 10, which is mechanically constrained by the bond to tubular member 9. Therefore, deflections and mechanical strain due to deflections in this area are much lower than in the central part of the diaphragm 10. This results in significantly lower levels of the mechanical fatigue loads on contact elements 13.
3) Lower levels of the mechanical fatigue loads in the peripheral area result in a much more stable parasitic strain induced in the sensing layer 17 by the contact elements 13. The more stable parasitic strain in turn results in more accurate and stable sensor signals.

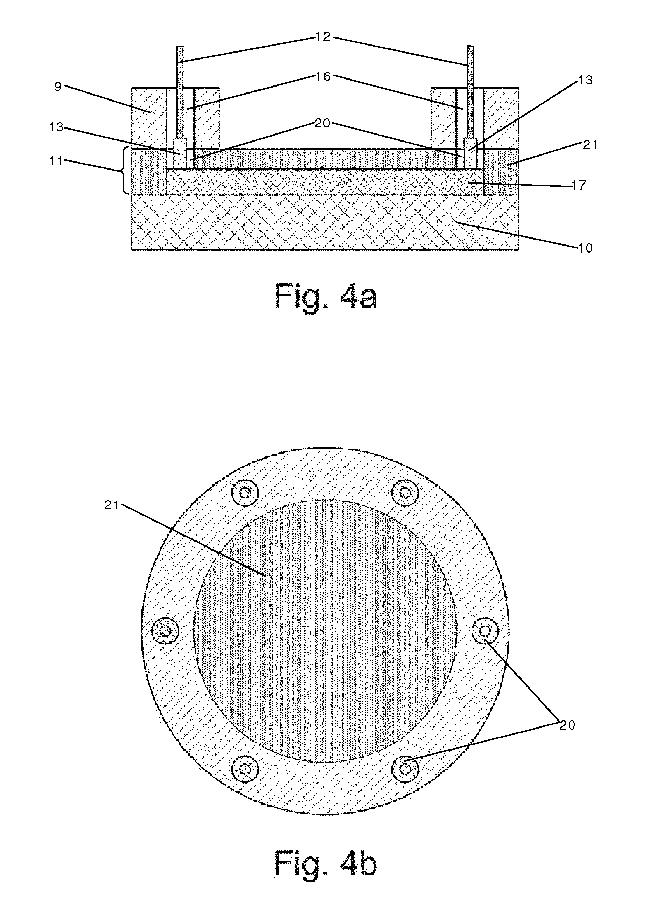

Figs. 4a and 4b illustrate a sensor according to a second embodiment of the invention. The sensor of the second embodiment is similar to the sensor of the first embodiment, and it will therefore not be described in detail here.

In the embodiment illustrated in Fig. 4a and 4b the sensing element 11 comprises a combined protecting and bonding layer 21 , instead of a separate protecting layer and a separate bonding layer. The combined protecting and bonding layer 21 illustrated in Figs. 4a and 4b provides the same functions as the protecting layer 18 and the bonding layer 19 in the embodiment illustrated in Figs. 3a and 3b, i.e. it bonds the diaphragm 10 to the tubular member 9, protects the sensing layer 17 from the reference fluid, and seals the channels 16, 20 where the wires 12 and the contact elements 13 are located, with respect to the measured and the reference fluids. This simplifies sensor design and its fabrication process.

In general, the tubular member 9 and the diaphragm 10 may be made from different types of materials, such as metals or ceramics which are resistant to the measured and the reference fluids.

The sensing layer 17 may include different types of the pressure sensing components. The pressure sensing components can, e.g., be piezoresistive metal or semiconductor strain gauges bonded to the diaphragm 10 with an adhesive or a glass, or metal or semiconductor strain gauges arranged on substrates that are bonded to the diaphragm 10. The pressure sensing components can also be layered piezoresistive structures deposited on the interior surface of diaphragm 10 by means of thin film or thick film technology.

Also, different types of temperature sensors, such as e.g. thermocouples, RTDs or thermistors, can be arranged in the sensing layer 17.

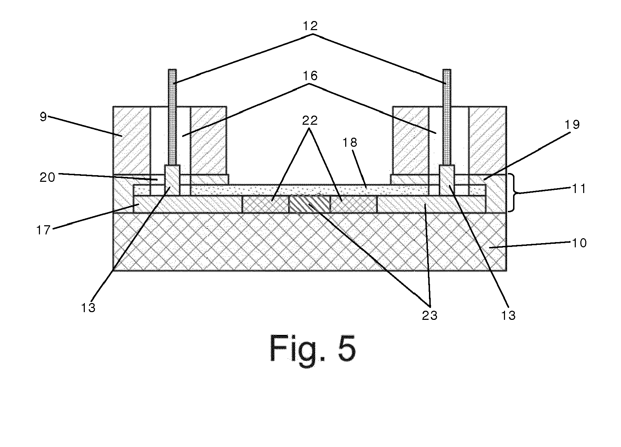

Fig. 5 is a cross sectional view of a sensor according to a third embodiment of the invention. In the sensor of Fig. 5 the sensing element 11 comprises thin film layers or thick film layers, or a combination of thick film layers and thin film layers, deposited on a surface of the diaphragm 10. The sensing layer 17 comprises pressure sensitive components 22, which, in this embodiment, are thin or thick film piezoresitors electrically arranged in a Wheatstone bridge by means of thick or thin film electrical connections 23. Electrical connections 23 provide both electrical communication between the piezoresitors and an electrical path from the Wheatstone bridge to the contact elements 13 that are connected to the wires 12, providing an electrical path to the sensor electronic circuit board.

The sensing layer 17 may further comprise temperature sensing elements, e.g. in the form of either thin film RTDs or thin film thermistors deposited on the interior surface of the diaphragm 10 and connected to the sensor electronic board in the same way as the described above thin or thick film pressure sensing components.

The preferred material for the tubular member 9 and the diaphragm 10 is an Alum ina ceramic material, due to a range of its advantages compared to other materials. These advantages include:
1) Alumina cannot be corroded and has a very high resistance to aggressive chemicals.
2) Alumina is a mechanically hard, strong and stable material.
3) Alumina is an electrical insulator. This eliminates additional insulating components that would be needed in the case of a metal tubular member for insulating the electrical connection elements.
4) It has an excellent performance as a substrate material for thin and thick films electronics.

The preferred material for the bonding layer 19 is a glass with a coefficient of thermal expansion (CTE) that is as close as possible to CTEs of Alumina materials used for the tubular member 9 and the diaphragm 10. The glass is chosen because it is an electrical insulator highly resistant to aggressive chemicals, and is capable of providing mechanically strong and stable hermetic joints between alumina ceramic components.

Preferred materials for the protecting layer 18 are silicon dioxide or silicon nitride, which are both very good electrical insulators resistant to a broad range of aggressive chemicals.

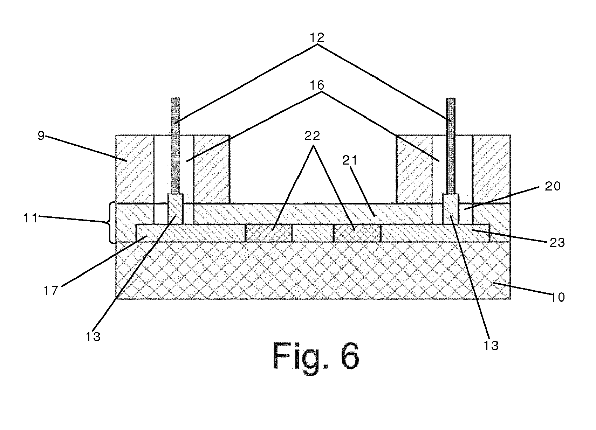

Fig. 6 is a cross sectional view of a sensor according to a fourth embodiment of the invention. The sensor of Fig. 6 is very similar to the sensor of Fig. 5, and it will therefore not be described in detail here. The sensor of Fig. 6 may be regarded as a modification of the sensor of Fig. 5.

This modification utilizes a combined protecting and bonding layer 21 made of glass, instead two layers (a protecting layer 18 and a bonding layer 19) of the sensor of Fig. 5.

The preferred contacts elements 13 for the sensors of Figs. 5 and 6 are either solder joints or conductive adhesive joints between the wires 12 and thin or thick film electrical connections 23.

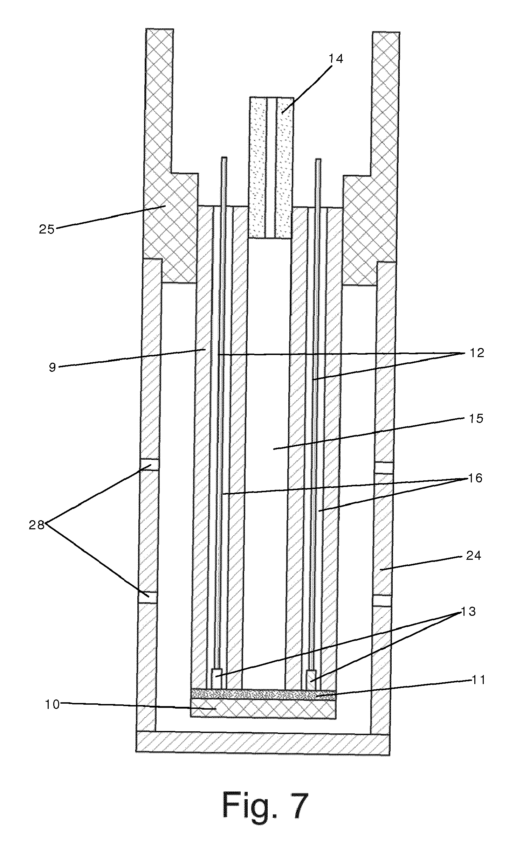

Another modification of the sensors of Figs. 5 and 6 is illustrated in Fig. 7. The sensor of Fig. 7 includes a shield member 24 made of a metal, and in form of a tube, one end of which is closed, and the opposite end is joined to a sensor electronics unit in the form of an electronic compartment 25. The shield member 24 is provided with holes 28 in its wall to provide a path of the measured media to the diaphragm 10.

The role of shield member 24 is manifold:
1) It shields the sensing components in the sensing layer 17 and the electrical connection components 12, 13 from electromagnetic radiation.
2) It protects the diaphragm 10 and the tubular member 9 from a direct mechanical contact that can be damaging for these components.

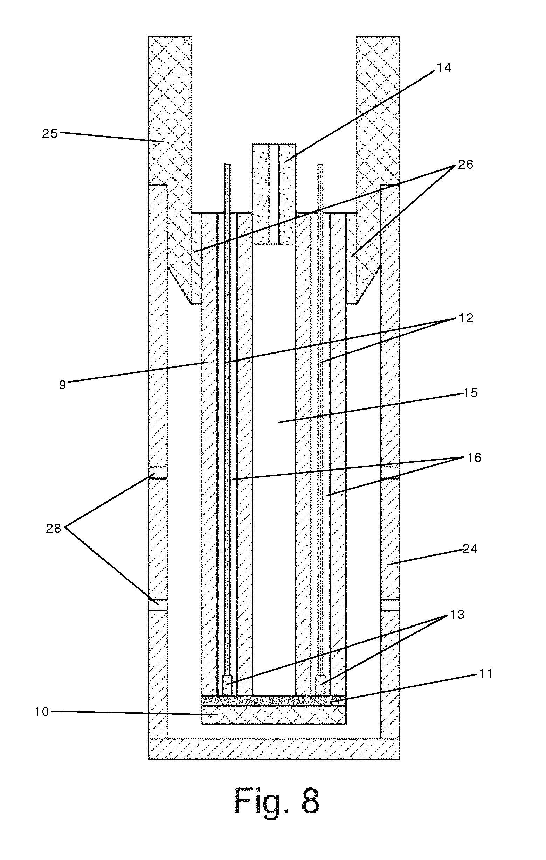

Fig. 8 is a cross sectional view of a sensor according to a sixth embodiment of the invention. In Fig. 8 a preferred design of a joint of the ceramic tubular member 9 to the electronic compartment 25 is shown. Here, a portion of the tubular member 9 is inserted into a cylindrical through-hole in electronic compartment 25 made of a metal, and joined to the inner surface of this hole with a layer of a glass-frit material 26. CTEs of the materials of the tubular member 9, the electronic compartment 25 and of bonding glass layer 26 must have values that ensure glass layer 26 to be in a mechanical compression in the entire range of operating temperature and pressure. It is well know that, in the case of compressed bond, glass frit materials are capable of providing strong and hermetic joints between metal and ceram ic parts.

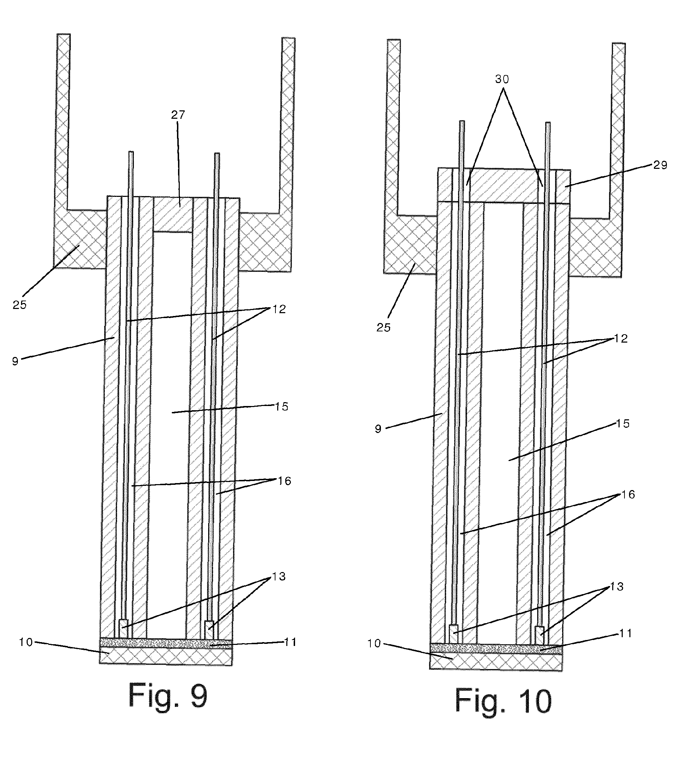

General designs of this invention, e.g. the embodiments shown in Figs 2 and 3, provide measurements of differential or gauge pressure. Similar designs can provide measurements of absolute pressure. In this case, the end of the tubular member 9, which is attached to the electronic compartment 25, is sealed either by an additional wall 27 of the tubular member 9, as illustrated in Fig. 9, or by a sealing plate 29 bonded to this end, as illustrated in Fig. 10. In this way, vacuum as a reference for absolute pressure measurements can be confined to reference cavity 15 during sensor manufacturing process. In order to provide a path for the wires 12 to the sensor electronics, sealing plate 29 is provided with through-holes 30 that coincide with the through-going channels 16 in the wall part of the tubular member 9.

The diaphragm 10 does not necessary have flat inner and outer surfaces, as shown in the general and preferred designs of Figs. 2-8. These surfaces may for instance include recess features that improve sensor sensitivity to pressure or its response time to temperature.

## Claims

1. A sensor comprising:
- a tubular member (9) comprising a wall part, said wall part defining an inner surface and an outer surface, and said tubular member (9) extending in an axial direction,
- a diaphragm (10) mounted on a first end of the tubular member (9) in such a manner that a cavity (15) is defined by the tubular member (9) and the diaphragm (10), the cavity (15) being delimited by the inner surface of the wall part of the tubular member (9) and a surface of the diaphragm (10), said cavity (15) extending in the axial direction,
- a sensing element (11) mounted on the diaphragm (10),
- a sensor electronics unit (25) arranged at a second end of the tubular member (9), said second end being arranged opposite to the first end, in the axial direction,
- one or more electrical wires (12) providing electrical connection between the sensing element (11) and the sensor electronics unit (25),
wherein the wall part of the tubular member (9) is provided with one or more through-going channels (16) extending in the axial direction, and wherein each of the electrical wires (12) is arranged inside one of the through-going channels (16).

2. A sensor according to claim 1 , wherein the sensing element (11) comprises a layered structure comprising a sensing layer (17) and a protecting and/or bonding layer (18, 19, 21).

3. A sensor according to claim 2, wherein the sensing element (11) comprises separate protecting (18) and bonding (19) layers.

4. A sensor according to claim 2, wherein the sensing element (11) comprises a combined protecting and bonding layer (21).

5. A sensor according to any of claims 2-4, wherein the protecting and/or bonding layer (18, 19, 21) is provided with one or more through-going holes (20), and wherein each of the through-going holes (20) of the protecting and/or bonding layer (18, 19, 21) is aligned with one of the through-going channels (16) formed in the wall part, each through-going hole (20) thereby providing a passage from a through-going channel (16) to the sensing layer (17) for accommodating a part of an electrical wire (12).

6. A sensor according to any of claims 2-5, wherein the protecting and/or bonding layer (18, 19, 21) hermetically seals the through-going channels (16) and/or the sensing layer (17) from a fluid arranged in contact with an exterior surface of the diaphragm (10).

7. A sensor according to any of the preceding claims, wherein a reference fluid is arranged in the cavity (15).

8. A sensor according to claim 7, further comprising a reference fluid passage (14) for allowing reference fluid to pass into or out of the cavity (15).

9. A sensor according to any of the preceding claims, wherein the sensor is a pressure sensor.

10. A sensor according to any of the preceding claims, wherein the sensor is a temperature sensor.

11. A sensor according to any of the preceding claims, wherein the tubular member (9) and/or the diaphragm (10) is/are made from a ceramic electrically insulating material.

12. A sensor according to any of the preceding claims, wherein each of the electrical wires (12) is attached to the sensing element (11) by means of a contact element (13).
